# EUROPEAN PATENT SPECIFICATION

(11) **EP 4 421 961 B1**
(45) Date of publication and mention of the grant of the patent: **06.05.2026**
(21) Application number: 23773503.0
(22) Date of filing: 15.02.2023
(51) Int. Cl.: H01M 50/24, H01M 50/244, H01M 50/249, H01M 50/262

(54) **FASTENING STRUCTURE, BATTERY BOX AND BATTERY**
BEFESTIGUNGSSTRUKTUR, BATTERIEKASTEN UND BATTERIE
STRUCTURE DE FIXATION, BOÎTIER DE BATTERIE ET BATTERIE

(30) Priority: 25.03.2022 CN 202210300071
(43) Date of publication of application: 28.08.2024
(73) Proprietor: Contemporary Amperex Technology (Hong Kong) Limited, Central, Central And Western District (HK)
(72) Inventor: HUANG, Zhijie, Ningde, Fujian 352100 (CN); MIAO, Huimin, Ningde, Fujian 352100 (CN); YU, Xiaoyin, Ningde, Fujian 352100 (CN)
(74) Representative: Ziebig Hengelhaupt Intellectual Property Attorneys Patentanwaltskanzlei PartGmbB
(86) International application number: PCT/CN2023/076195
(87) International publication number: WO 2023/179252

(56) References cited:
- FR-A1- 2 550 267
- JP-A- 2005 110 972
- JP-A- 2005 143 966
- JP-A- 2007 105 281
- JP-A- 2007 105 281
- KR-A- 20110 057 780

## Description

### TECHNICAL FIELD

This application relates to the technical field of batteries, and in particular, to a fastening structure, a battery box, and a battery.

### BACKGROUND

A battery is a core of energy supply for an electric vehicle. Service life and safety performance of the electric vehicle are both closely associated with the battery. Therefore, extremely strict requirements are imposed on a protection ability of a battery box for accommodating the battery cell, and particularly, increasingly higher requirements are imposed on waterproof and dustproof grades of the battery box.

To satisfy the dustproof and waterproof requirements, for any existing battery, a sealing structure needs to be disposed between a box body and a box cover, and then a fastening structure such as that disclosed in JP2007105281 is used for tightening and pressing, to achieve a sealing effect. However, for small-sized batteries such as 12 V batteries and batteries of two-wheeled electric vehicles, a disposition space of the fastening structure is limited, resulting in a poor fastening effect.

### SUMMARY

In view of the foregoing problems, this application provides a fastening structure, a battery box, and a battery, which can resolve a problem of a poor fastening effect caused because a disposition space of a fastening structure is limited in a small-sized battery.

According to a first aspect, this application provides a fastening structure according to claim 1, configured to fasten a first object and a second object, where the fastening structure includes:
a first fastener capable of being fixed on the first object, where first fastener has a first fastening portion;
a second fastener detachably connected to the first fastener, where the second fastener has a second fastening portion and a fitting portion; and
a locking member capable of being fixed on the first object or the second object;
where when the second fastener is connected to the first fastener, the second fastening portion is fitted with the first fastening portion, and the second fastener operably rotates relative to the first fastener to drive the first object to move toward the second object; and
the second fastener is configured to lock the fitting portion into the locking member in a rotation process.

Based on the foregoing fastening structure, due to rotation of the second fastener, the first fastener can drive the entire first object to move toward the second object, and therefore, the first object and the second object are under uniform stress, so that a curling phenomenon can be avoided for a sealing structure disposed between the first object and the second object, thereby implementing a good sealing effect on the first object and the second object. In addition, because the first fastener, the second fastener, and the locking member are additionally disposed outside the first object and the second object, the structure is compact, and therefore, no hole or trough needs to be opened in the first object and the second object, thereby implementing high structure stability for the first object and the second object.

In some embodiments, one of the first fastening portion and the second fastening portion includes a fastening groove, the other one includes a fastening bulge, and the fastening groove is fitted with the fastening bulge. A fitting manner is set for the fastening groove and the fastening bulge, so that the fitting manner of the first fastening portion and the second fastening portion is simple, thereby simplifying an operation process of the second fastener.

In some embodiments, the fastening groove includes a tooth trough, and the fastening bulge includes a tooth portion engaged with the tooth trough. The fitting manner of the tooth trough and the tooth portion is more reliable than a fitting manner of another groove and a bulge, and the first fastener can be steadily driven to move during the rotation of the second fastener, thereby further improving stress uniformity of the sealing structure between the first object and the second object.

In some embodiments, the first fastening portion includes a rack, and the second fastening portion includes a cog engaged with the rack. An engagement manner is set for the cog and the rack, so that the cog can be rotated during the rotation of the second fastener to further drive the rack engaged with the cog to move linearly, and the first object can steadily move toward the second object, thereby further improving the stress uniformity of the sealing structure between the first object and the second object.

In some embodiments, the fastening structure further includes a rotating shaft, and the second fastener is rotatively connected to the second object through the rotating shaft to rotate relative to the first fastener. The rotating shaft is disposed and rotatively connected to the second object, to provide a supporting point for the rotation of the second fastener relative to the first fastener, so that the rotation process is more reliable and the first fastener more stably drives the first object to move.

In some embodiments, a shaft hole is opened in the second fastener, one end of the rotating shaft is capable of being fixedly connected to the second object, and another end of the rotating shaft is passed through the shaft hole to be rotatively connected to the second fastener. In the manner of opening the shaft hole in the second fastener to be rotatively connected to the rotating shaft, the second fastener is indirectly rotated relative to the second object, which can facilitate rotation of the second fastener.

In some embodiments, the fastening structure further includes a restraint member, and the restraint member is connected to one end of the rotating shaft that is farther away from the second object to fit with the second object to form a restraint space capable of axially restricting the second fastener. The restraint member is disposed to fit with the second object to form the restraint space capable of axially restricting the second fastener, which can reduce axial movement or deflection of the second fastener in a rotation process to maintain fitting with the first fastener, thereby improving rotation stability.

In some embodiments, the rotating shaft is integrally formed with the restraint member, and the rotating shaft is detachably connected to the second object. The rotating shaft is disposed to be integrally formed with the restraint member, which can simplify a structure and improve structural strength. The manner of connecting the rotating shaft to the second object detachably can facilitate disassembly between the second fastener and the first fastener, so that the first object can be further separated from the second object.

In some embodiments, the locking member is convexly disposed on an outer surface of the first object or the second object. The locking member is convexly disposed on the outer surface of the first object or the second object, so that the fitting portion of the second fastener can be fitted with the locking member easily to implement locking, thereby reducing operation difficulty.

In some embodiments, the fitting portion includes a locking groove, and the locking groove is fitted with the locking member to implement locking. The manner and structure of fitting and locking the locking groove with the convexly disposed locking member are both simple, and locking is highly reliable.

In some embodiments, the locking groove penetrates through the second fastener. The locking groove penetrates through the second fastener, which can be convenient for human eyes to observe whether the fitting portion is completely locked, thereby improving locking reliability and facilitating operation.

In some embodiments, the fitting portion is elastic, and the fitting portion is capable of abutting against the locking member before locking, so that the fitting portion deforms and is capable of recovering from deformation when locked into the locking member. The fitting portion is set to be elastic, and therefore, the fitting portion can elastically deform if the fitting portion abuts against the locking member during rotation of the second fastener and before locking with the locking member, so that the second fastener can continuously rotate to further successfully lock the locking member into the locking groove. In this case, the fitting portion recovers from deformation because the fitting portion is no longer under action force of the locking member, so that the locking member can be locked into the locking groove. Therefore, the manner of setting the fitting portion to be elastic can simplify the locking process and the locking structure.

In some embodiments, the fastening structure further includes a guide member, the guide member is capable of being fixed on the first object or the second object, a gap is formed between the guide member and the first object or the second object to form a guide space, and the second fastener is capable of being passed through the guide space in a rotation process to guide the second fastener to rotate. The guide member is disposed to form the guide space, which can further improve the rotation reliability of the second fastener, thereby further improving movement stability of the first fastener.

In some embodiments, the fitting portion and the second fastening portion are spaced apart, and the guide space is capable of guiding the second fastener to rotate between the fitting portion and the second fastening portion. The guide space is disposed, so that the second fastener can be guided to rotate between the fitting portion and the second fastening portion. On the one hand, the locking and fitting of the fitting portion and the locking member is not affected; on the other hand, the guide space can guide a portion close to a middle portion of the second fastener, which improves guiding reliability.

In some embodiments, the second fastener includes a handle portion, the handle portion is connected to the second fastening portion, and the fitting portion is disposed on the handle portion. The handle portion is disposed, which can facilitate the rotation of the second fastener.

According to a second aspect, this application provides a battery box, including a box cover and a box body, where the battery box further includes the fastening structure in the foregoing embodiment, and the fastening structure is configured to fasten the box cover and the box body.

According to a third aspect, this application provides a battery, including the battery box in the foregoing embodiment.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, same parts are denoted by same reference signs. In the accompanying drawings:
FIG. 1 is a schematic structural diagram of a battery according to some embodiments of this application;
FIG. 2 is a schematic structural exploded view of a battery box in the battery shown in FIG. 1;
FIG. 3 is a schematic structural diagram of a second fastener in the battery box shown in FIG. 2;
FIG. 4 is a locally enlarged schematic diagram of a position A in the battery box shown in FIG. 2;
FIG. 5 is a schematic structural front view of the second fastener shown in FIG. 3; and
FIG. 6 is a schematic structural diagram of a cross section of the second fastener shown in FIG. 5 along A-A.

Reference signs in specific embodiments are as follows:
Battery 1000;
Fastening structure 100;
First fastener 10 and first fastening portion 11;
Second fastener 20, second fastening portion 21, fitting portion 22, shaft hole 23, accommodating groove 24 and handle portion 25;
Locking member 30 and guide inclined plane 31;
Rotating shaft 40;
Restraint member 50;
Guide member 60;
Battery box 200;
Box cover 210; and
Box body 220.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and a brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, 1 and/or 2 may indicate the following three cases: presence of only 1, presence of both 1 and 2, and presence of only 2. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fix" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

Currently, the Chinese government is vigorously promoting new energy vehicles, especially battery electric vehicles, and various main engine plants have also invested heavily in research and development of related vehicle models. Various performance parameters of a power supply system used as one of key parts of the electric vehicle have been continuously improved to satisfy a use requirement of a suitable vehicle model. The power supply system is mainly composed of a battery box, a battery cell, a related electrical component and the like. For effective operation of the battery cell, the related electrical component and the like, a battery box with certain protective performance is required to provide a necessary operating environment, and therefore, the high protective performance of battery box is a guarantee for stable and reliable operation of the power supply system.

In a conventional sealing manner of the battery, a sealing structure such as an elastic sealing member is disposed between the box body and the box cover, and then a fastening structure is used for fastening and pressing, so that the sealing structure is compressed to seal the gap between the box body and the box cover.

The inventor has found that the fastening structure is usually passed through the box cover and the sealing structure via a bolt, and then threadedly connected to a threaded hole in the box body for fastening and pressing, and the threaded hole is usually disposed on an inner side of the box body to avoid affecting appearance of the battery. However, for small-sized batteries such as 12 V batteries and batteries of two-wheeled electric vehicles, battery structures need to be compact, and therefore, there is not enough space to dispose a plurality of threaded holes on the inner side of the box body. When the number of threaded holes is reduced, a distance between threaded holes is enlarged, and the sealing structure between two adjacent threaded holes is likely to curl when being fitted with and fastened to the bolt, which causes a poor sealing effect and further causes water vapor to enter the battery box and corrode various metal parts, thereby affecting insulation performance.

To avoid the problem of the poor sealing effect caused due to curling of the sealing structure, the applicant has found through research that the fastening structure can be disposed on the outer side of the box body for fastening, and therefore, battery cell placement space inside the box body may not be occupied. However, a large number of bolt structures are still exposed, which not only affects the appearance of the battery, but also complicates an operation process. In addition, for the small-sized battery with the large number of threaded holes, structure stability of the battery box also deteriorates.

To further resolve the appearance problem of the battery, the applicant has found through research that the original bolt fastening manner can be replaced with a rotary pressing and fastening manner, so that the entire box cover can press downward to implement fastening and sealing, which not only avoids the curling phenomenon of the sealing structure, but also implements a compact structure for the fastening structure, without opening holes in the box body and the box cover, thereby improving the structure stability of the battery box.

The fastening structure disclosed in this embodiment of this application can be applied to the battery box of the battery, and can also be applied to another object to which the fastening structure is applicable. This is not limited herein.

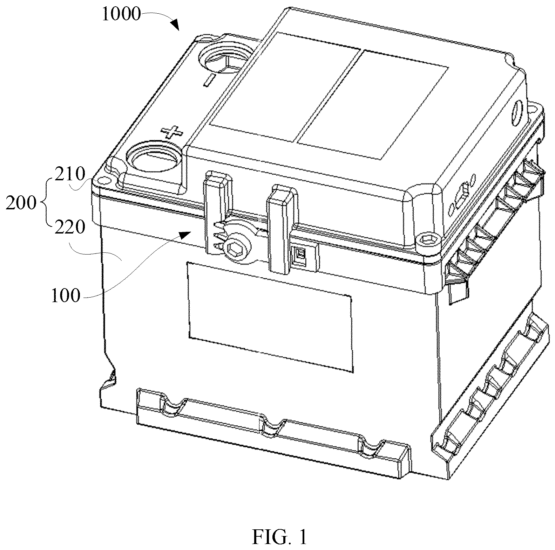

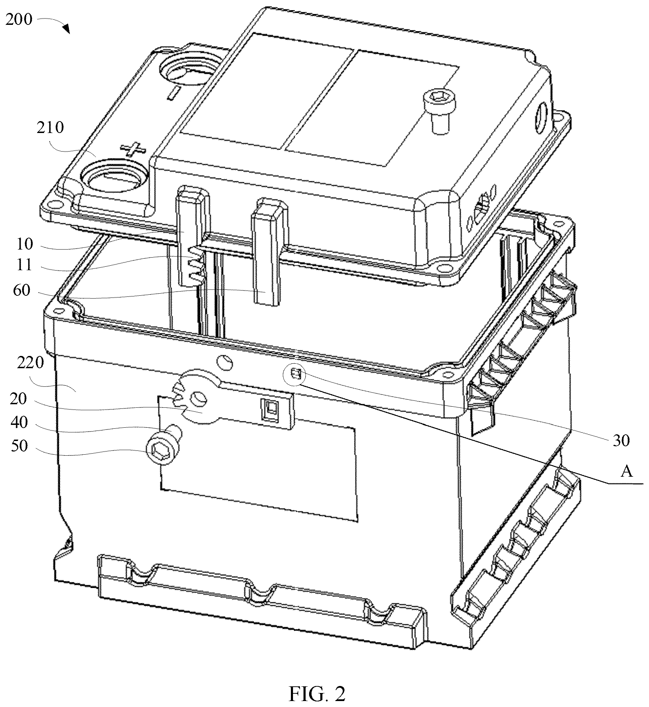

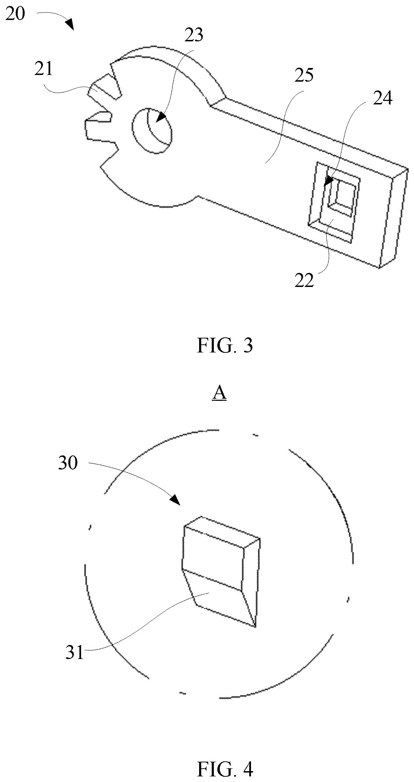

According to some embodiments of this application, referring to FIG. 1 and further to FIG. 2 and FIG. 3, FIG. 1 is a schematic structural diagram of a battery according to some embodiments of this application; FIG. 2 is a schematic structural exploded view of a battery box in the battery shown in FIG. 1; and FIG. 3 is a schematic structural diagram of a second fastener in the battery box shown in FIG. 2. This application provides a fastening structure 100, configured to fasten a first object and a second object. The fastening structure 100 includes a first fastener 10, a second fastener 20, and a locking member 30. The first fastener 10 can be fixed on a first object, and the first fastener 10 has a first fastening portion 11. The second fastener 20 is detachably connected to the first fastener 10, where the second fastener 20 has a second fastening portion 21 and a fitting portion 22. The locking member 30 can be fixed on the first object or the second object. When the second fastener 20 is connected to the first fastener 10, the second fastening portion 21 is fitted with the first fastening portion 11, and the second fastener 20 operably rotates relative to the first fastener 10 to drive the first object to move toward the second object. The second fastener 20 is configured to lock the fitting portion 22 into the locking member 30 in a rotation process.

The first fastener 10 is a general term of a type of mechanical parts that can be fitted with other parts to implement mutual connection, fixation, or auxiliary connection of two or more parts (or members). The first fastener 10 is specifically fitted with the second fastener 20 in this application to implement mutual connection between the first object and the second object.

The second fastener 20 is a general term of a type of mechanical parts that can be fitted with other parts to implement mutual connection, fixation, or auxiliary connection of two or more parts (or members). The second fastener 20 is specifically fitted with the first fastener 10 in this application to implement mutual connection between the first object and the second object.

For example, the first fastener 10 and the second fastener 20 are a cog and a rack, a worm wheel and a worm, a lead screw and a slider, a crank and a slider, and the like that are fitted with each other.

The first fastening portion 11 refers to a portion of the first fastener 10 that can be directly fitted with another part to implement mutual connection, fixation, or auxiliary connection of two or more parts (or members). The first fastening portion 11 is specifically fitted with the second fastening portion 21 to implement mutual connection between the first object and the second object.

The second fastening portion 21 refers to a portion of the second fastener 20 that can be directly fitted with another part to implement mutual connection, fixation, or auxiliary connection of two or more parts (or members). The second fastening portion 21 is specifically fitted with the first fastening portion 11 to implement mutual connection between the first object and the second object.

For example, the first fastening portion 11 and the second fastening portion 21 can be a tooth trough and a tooth portion, a shaft and a shaft hole, and the like that are fitted with each other.

The locking member 30 refers to a part that can restrict a motion of an object, and the motion can be movement or rotation. The locking member 30 can directly restrict the restricted object or indirectly restrict the restricted object through an intermediate member.

For example, the locking member 30 can be a plug, a bolt, a padlock, a cable tie, or the like.

The fitting portion 22 refers to a part that can be fitted with another part to form a fit relationship, and the fit relationship can be interference fit, clearance fit, threaded fit, abutting fit, or the like.

The second fastener 20 is detachably connected to the first fastener 10, and this indicates that the second fastener 20 and the first fastener 10 can be connected to or separated from each other.

The second fastening portion 21 is fitted with the first fastening portion 11, and this indicates that movements of the second fastening portion 21 and the first fastening portion 11 are correlated. When the second fastener 20 rotates relative to the first fastener 10, the second fastening portion 21 is fitted with the first fastening portion 11, and therefore, the first fastener 10 can move, thereby further driving the first object to move toward the second object.

The fitting portion 22 is locked into the locking member 30, and this indicates that the fitting portion 22 is restricted by the locking member 30, so that the second fastener 20 cannot continuously rotate.

The first fastener 10 is fixed on the first object, the locking member 30 is fixed on the first object or the second object, and then the second fastener 20 is connected to the first fastener 10, so that the second fastening portion 21 on the second fastener 20 is fitted with the first fastening portion 11 on the first fastener 10; and then the second fastener 20 is rotated relative to the first fastener 10, to drive the first object to press downward to approach the second object. When the fitting portion 22 of the second fastener 20 is locked into the locking member 30, fastening and connection of the first object and the second object can be completed.

Due to rotation of the second fastener 20, the first fastener 10 can drive the entire first object to move toward the second object, and therefore, the first object and the second object are under uniform stress, so that a curling phenomenon can be avoided for a sealing structure disposed between the first object and the second object, thereby implementing a good sealing effect on the first object and the second object. In addition, because the first fastener 10, the second fastener 20, and the locking member 30 are additionally disposed outside the first object and the second object, the structure is compact, and therefore, no hole or trough needs to be opened in the first object and the second object, thereby implementing high structure stability for the first object and the second object.

According to some embodiments of this application, optionally, still referring to FIG. 2 and FIG. 3, one of the first fastening portion 11 and the second fastening portion 21 includes a fastening groove, the other one includes a fastening bulge, and the fastening groove is fitted with the fastening bulge.

The fastening groove is fitted with the fastening bulge, and this indicates that the fastening bulge can enter the fastening groove, so that movements of the fastening groove and the fastening bulge are correlated.

A fitting manner is set for the fastening groove and the fastening bulge, so that the fitting manner of the first fastening portion 11 and the second fastening portion 21 is simple, thereby simplifying an operation process of the second fastener 20.

According to some embodiments of this application, optionally, the fastening groove includes a tooth trough, and the fastening bulge includes a tooth portion engaged with the tooth trough.

The fitting manner of the tooth trough and the tooth portion is more reliable than a fitting manner of another groove and a bulge, and the first fastener 10 can be steadily driven to move during the rotation of the second fastener 20, thereby further improving stress uniformity of the sealing structure between the first object and the second object.

According to some embodiments of this application, optionally, still referring to FIG. 2 and FIG. 3, the first fastening portion 11 includes a rack, and the second fastening portion 21 includes a cog engaged with the rack.

An engagement manner is set for the cog and the rack, so that the cog can be rotated during the rotation of the second fastener 20 to further drive the rack engaged with the cog to move linearly, and the first object can steadily move toward the second object, thereby further improving the stress uniformity of the sealing structure between the first object and the second object.

It should be noted that the number of tooth portions of the cog and the number of tooth portions of the rack can be determined based on actual displacement of relative movements of the first object and the second object, and the displacement is related to required compression of the sealing structure. Specifically, in this embodiment of this application, the number of tooth portions of the cog is 2, the corresponding number of tooth troughs is 3, the number of tooth portions of the rack is 3, and the corresponding number of tooth troughs is 3.

According to some embodiments of this application, optionally, still referring to FIG. 2 and FIG. 3, the fastening structure 100 further includes a rotating shaft 40, and the second fastener 20 is rotatively connected to the second object through the rotating shaft 40 to rotate relative to the first fastener 10.

The rotating shaft 40 is disposed and rotatively connected to the second object, to provide a supporting point for the rotation of the second fastener 20 relative to the first fastener 10, so that the rotation process is more reliable and the first fastener 10 more stably drives the first object to move.

Specifically, the second fastening portion 21 of the second fastener 20 is rotatively connected to the second object through the rotating shaft 40. More specifically, when the second fastening portion 21 includes a cog, an axis of the rotating shaft 40 is overlapped with an axis of the cog.

According to some embodiments of this application, optionally, still referring to FIG. 2 and FIG. 3, a shaft hole 23 is opened in the second fastener 20, one end of the rotating shaft 40 is capable of being fixedly connected to the second object, and another end of the rotating shaft 40 is passed through the shaft hole 23 to be rotatively connected to the second fastener 20.

In the manner of opening the shaft hole 23 in the second fastener 20 to be rotatively connected to the rotating shaft 40, the second fastener 20 is indirectly rotated relative to the second object, which can facilitate rotation of the second fastener 20.

More specifically, the rotating shaft 40 has a threaded portion, a threaded hole is opened in the second object, and the threaded portion of the rotating shaft 40 is threadedly connected to the threaded hole in the second object.

According to some embodiments of this application, optionally, still referring to FIG. 2 and FIG. 3, the fastening structure 100 further includes a restraint member 50, and the restraint member 50 is connected to the rotating shaft 40 and can be fitted with the second object to form a restraint space capable of axially restricting the second fastener 20.

The restraint member refers to a part that can have a movement restricting effect on an object in motion, and the movement can be restricted in only one direction or a plurality of directions.

For example, the restraint member can be a stopper, a screw nut, or the like.

The axial direction in the axial restricting refers to an extension direction of the axis of the rotating shaft 40.

The restraint member 50 is disposed to fit with the second object to form the restraint space capable of axially restricting the second fastener 20, which can reduce axial movement or deflection of the second fastener 20 in a rotation process to maintain fitting with the first fastener 10, thereby improving rotation stability.

According to some embodiments of this application, optionally, still referring to FIG. 2, the rotating shaft 40 is integrally formed with the restraint member 50, and the rotating shaft 40 is detachably connected to the second object.

Integral forming indicates that the rotating shaft 40 and the restraint member 50 are simultaneously processed into an inseparable part.

The rotating shaft 40 is disposed to be integrally formed with the restraint member 50, which can simplify a structure and improve structural strength. The manner of connecting the rotating shaft 40 to the second object detachably can facilitate disassembly between the second fastener 20 and the first fastener 10, so that the first object can be further separated from the second object.

Specifically, in some embodiments, the rotating shaft 40 and the restraint member 50 are integrally formed to form a bolt structure.

According to some embodiments of this application, optionally, still referring to FIG. 2 and FIG. 3, the locking member 30 is convexly disposed on an outer surface of the first object or the second object.

The locking member 30 is convexly disposed on the outer surface of the first object or the second object, so that the fitting portion 22 of the second fastener 20 can be fitted with the locking member 30 easily to implement locking, thereby reducing operation difficulty.

In this embodiment of this application, the locking member 30 is fixed on the second object.

According to some embodiments of this application, optionally, still referring to FIG. 2 and FIG. 3, the fitting portion 22 includes a locking groove, and the locking groove is fitted with the locking member 30 to implement locking.

The manner and structure of fitting and locking the locking groove with the convexly disposed locking member 30 are both simple, and locking is highly reliable.

According to some embodiments of this application, optionally, still referring to FIG. 2 and FIG. 3, a locking groove penetrates through the second fastener 20.

The locking groove penetrates through the second fastener 20, and this indicates that the locking groove is disposed on the second fastener 20 in a form of a through hole.

The locking groove penetrates through the second fastener 20, which can be convenient for human eyes to observe whether the fitting portion 22 is completely locked, thereby improving locking reliability and facilitating operation.

Specifically, the locking groove penetrates through the second fastener 20 in a direction parallel to the rotating shaft 40.

In other embodiments, the locking groove may not penetrate through the second fastener 20, and is in a form of, for example, a blind hole. This is not limited herein.

According to some embodiments of this application, optionally, still referring to FIG. 2, FIG. 3, and FIG. 4, a cross section of the locking groove is square, and a cross section of the locking member 30 is also square.

The square locking groove and the square locking member 30 are provided, so that there are locking surfaces for locking in all four directions, thereby improving locking reliability.

According to some embodiments of this application, optionally, still referring to FIG. 2, FIG. 3, and FIG. 4, the locking member 30 is recessed into an outer surface of the first object or the second object, the fitting portion 22 includes a locking bulge, and the locking bulge is fitted with the locking member 30 to implement locking.

The manner and structure of fitting and locking the locking bulge with the recessed locking member 30 are both simple, and locking is highly reliable.

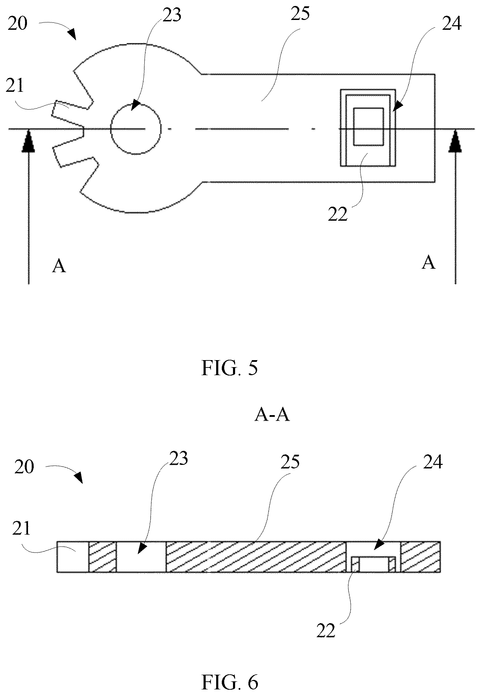

According to some embodiments of this application, optionally, still referring to FIG. 3, FIG. 5, and FIG. 6, the fitting portion 22 is elastic, and the fitting portion 22 is capable of abutting against the locking member 30 before locking, so that the fitting portion 22 deforms and is capable of recovering from deformation when locked into the locking member 30.

The fitting portion 22 is elastic, and this indicates that the fitting portion 22 can be elastically deformed under action of external force.

The fitting portion 22 is set to be elastic, and therefore, the fitting portion can elastically deform if the fitting portion abuts against the locking member 30 during rotation of the second fastener 20 and before locking is completed, so that the second fastener 20 can continuously rotate to further successfully lock the locking member 30 into the locking groove. In this case, the fitting portion 22 recovers from deformation because the fitting portion 22 is no longer under action force of the locking member 30, so that the locking member 30 can be locked into the locking groove. Therefore, the manner of setting the fitting portion 22 to be elastic can simplify the locking process and the locking structure.

Specifically, an accommodating groove 24 is further opened in the second fastener 20, the fitting portion 22 is disposed in the accommodating groove 24, and there are gaps between at least two opposite side walls of the fitting portion 22 and groove walls of the accommodating groove 24.

In this way, the fitting portion 22 can be disposed in the accommodating groove 24 in a form of an elastic arm. On the one hand, the rotation of the second fastener 20 is not hindered; on the other hand, the fitting portion 22 can be protected.

Preferably, only one side wall of the fitting portion 22 is connected to the groove wall of the accommodating groove 24.

Only one side wall of the fitting portion 22 is connected to the groove wall of the accommodating groove 24, and therefore, a suspended elastic arm can be formed and an elastic deformation ability is stronger, so that the locking member 30 moves more smoothly relative to the fitting portion 22.

More specifically, the accommodating groove 24 penetrates through the second fastener 20.

According to some embodiments of this application, optionally, still referring to FIG. 4, the locking member 30 has a guide inclined plane 31, where the guide inclined plane 31 can guide the fitting portion 22 to be locked into the locking member 30.

The guide inclined plane 31 is disposed, which can avoid damage of the fitting portion 22 caused due to direct collision with the locking member 30, so that a process of locking the fitting portion 22 into the locking member 30 is smoother.

In other embodiments, the guide inclined plane 31 may also be provided on the fitting portion 22. This is not limited herein.

According to some embodiments of this application, optionally, still referring to FIG. 2 and FIG. 3, the fastening structure 100 further includes a guide member 60, the guide member 60 is capable of being fixed on the first object or the second object, a gap is formed between the guide member 60 and the first object or the second object to form a guide space, and the second fastener 20 is capable of being passed through the guide space in a rotation process to guide the second fastener 20 to rotate.

The guide member 60 refers to a part that can have a guide effect on a movement of an object. The guide effect can be implemented via direct contact between the guide member 60 and the object, and the guided object can be guided to move along an extension direction of the guide member 60. The second fastener 20 can be passed through the guide space in a rotation process, and this indicates that the second fastener 20 can at least partially move in the guide space in the rotation process.

The guide member 60 is disposed to form the guide space, which can further improve the rotation reliability of the second fastener 20, thereby further improving the movement stability of the first fastener 10.

Specifically, the guide member 60 is fixed on the first object.

According to some embodiments of this application, optionally, still referring to FIG. 2 and FIG. 3, the fitting portion 22 and the second fastening portion 21 are spaced apart, and the guide space is capable of guiding the second fastener 20 to rotate between the fitting portion 22 and the second fastening portion 21.

The guide space is disposed, so that the second fastener 20 can be guided to rotate between the fitting portion 22 and the second fastening portion 21. On the one hand, the locking and fitting of the fitting portion 22 and the locking member 30 is not affected; on the other hand, the guide space can guide a portion close to a middle portion of the second fastener 20, which improves guiding reliability.

According to some embodiments of this application, optionally, still referring to FIG. 3, the second fastener 20 includes a handle portion 25, the handle portion 25 is connected to the second fastening portion 21, and the fitting portion 22 is disposed on the handle portion 25.

The handle portion 25 refers to a part that can be held by an external person or device. Specifically, the handle portion 25 has a certain extension length to facilitate holding of the external person or device.

The handle portion 25 is disposed, which can facilitate the rotation of the second fastener 20.

Specifically, the handle portion 25 of the second fastener 20 can be passed through the guide space in a rotation process to guide the second fastener 20 to rotate.

Because the handle portion 25 is long, the handle portion 25 is passed through the guide space, so that the second fastener 20 can rotate smoothly.

According to some embodiments of this application, still referring to FIG. 1 and FIG. 2, this application also provides a battery box 200, including a box cover 210 and a box body 220, where the battery box 200 further includes the fastening structure 100 in any one of the foregoing solutions, and the fastening structure 100 is configured to fasten the box cover 210 and the box body 220.

In this embodiment of this application, the first object corresponds to the box cover 210 and the second object corresponds to the box body 220.

According to some embodiments of this application, still referring to FIG. 1, this application further provides a battery 1000, including the battery box 200 in any one of the foregoing solutions.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A fastening structure (100), configured to fasten a first object and a second object and wherein the fastening structure (100) comprises:
a first fastener (10) capable of being fixed on the first object, wherein the first fastener (10) has a first fastening portion (11);
a second fastener (20) detachably connected to the first fastener (10), wherein the second fastener (20) has a second fastening portion (21) and a fitting portion (22); and
a locking member (30) capable of being fixed on the first object or the second object;
wherein when the second fastener (20) is connected to the first fastener (10), the second fastening portion (21) is fitted with the first fastening portion (11), and the second fastener (20) operably rotates relative to the first fastener (10) to drive the first object to move toward the second object; and
the second fastener (20) is configured to lock the fitting portion (22) into the locking member (30) in a rotation process;
**characterized in that** the second fastener (20) comprises a handle portion (25), the handle portion (25) is connected to the second fastening portion (21), and the fitting portion (22) is disposed on the handle portion (25).

2. The fastening structure (100) according to claim 1, wherein one of the first fastening portion (11) and the second fastening portion (21) comprises a fastening groove, the other one comprises a fastening bulge, and the fastening groove is fitted with the fastening bulge.

3. The fastening structure (100) according to claim 2, wherein the fastening groove comprises a tooth trough, and the fastening bulge comprises a tooth portion engaged with the tooth trough.

4. The fastening structure (100) according to any one of claims 1 to 3, wherein the first fastening portion (11) comprises a rack, and the second fastening portion (21) comprises a cog engaged with the rack.

5. The fastening structure (100) according to any one of claims 1 to 4, wherein the fastening structure (100) further comprises a rotating shaft (40), and the second fastener (20) is rotatively connected to the second object through the rotating shaft (40) to rotate relative to the first fastener (10).

6. The fastening structure (100) according to claim 5, wherein a shaft hole (23) is opened in the second fastener (20), one end of the rotating shaft (40) is capable of being fixedly connected to the second object, and another end of the rotating shaft (40) is passed through the shaft hole (23) to be rotatively connected to the second fastener (20).

7. The fastening structure (100) according to claim 6, wherein the fastening structure (100) further comprises a restraint member (50), and the restraint member (50) is connected to one end of the rotating shaft (40) that is farther away from the second object to fit with the second object to form a restraint space capable of axially restricting the second fastener (20).

8. The fastening structure (100) according to claim 7, wherein the rotating shaft (40) is integrally formed with the restraint member (50), and the rotating shaft (40) is detachably connected to the second object.

9. The fastening structure (100) according to any one of claims 1 to 8, wherein the locking member (30) is convexly disposed on an outer surface of the first object or the second object.

10. The fastening structure (100) according to claim 9, wherein the fitting portion (22) comprises a locking groove, and the locking groove is fitted with the locking member (30) to implement locking, preferably wherein the locking groove penetrates through the second fastener (20).

11. The fastening structure (100) according to claim 9, wherein the fitting portion (22) is elastic, and the fitting portion (22) is capable of abutting against the locking member (30) before locking, so that the fitting portion (22) deforms and is capable of recovering from deformation when locked into the locking member (30).

12. The fastening structure (100) according to any one of claims 1 to 11, wherein the fastening structure (100) further comprises a guide member (60), the guide member (60) is capable of being fixed on the first object or the second object, a gap is formed between the guide member (60) and the first object or the second object to form a guide space, and the second fastener (20) is capable of being passed through the guide space in a rotation process to guide the second fastener (20) to rotate, preferably wherein the fitting portion (22) and the second fastening portion (21) are spaced apart, and the guide space is capable of guiding the second fastener (20) to rotate between the fitting portion (22) and the second fastening portion (21).

13. A battery box (200) comprising a box cover (210) and a box body (220), wherein the battery box (200) further comprises the fastening structure (100) according to any one of claims 1 to 12, and the fastening structure (100) is configured to fasten the box cover (210) and the box body (220).

14. A battery (1000), **characterized by** comprising the battery box (200) according to claim 13.

## Patentansprüche

1. Eine Befestigungsstruktur (100), ausgebildet zum Befestigen eines ersten Objekts und eines zweiten Objekts, wobei die Befestigungsstruktur (100) umfasst:
einen ersten Befestiger (10), der am ersten Objekt befestigbar ist, wobei der erste Befestiger (10) einen ersten Befestigungsabschnitt (11) aufweist;
einen zweiten Befestiger (20), der lösbar mit dem ersten Befestiger (10) verbunden ist, wobei der zweite Befestiger (20) einen zweiten Befestigungsabschnitt (21) und einen Passabschnitt (22) aufweist; und
ein Verriegelungselement (30), das am ersten Objekt oder am zweiten Objekt befestigbar ist;
wobei, wenn der zweite Befestiger (20) mit dem ersten Befestiger (10) verbunden ist, der zweite Befestigungsabschnitt (21) mit dem ersten Befestigungsabschnitt (11) in Eingriff steht und der zweite Befestiger (20) relativ zum ersten Befestiger (10) drehbar ist, um das erste Objekt in Richtung des zweiten Objekts zu bewegen; und
der zweite Befestiger (20) dazu ausgebildet ist, den Passabschnitt (22) während eines Drehvorgangs in das Verriegelungselement (30) einzurasten;
**dadurch gekennzeichnet, dass** der zweite Befestiger (20) einen Griffabschnitt (25) umfasst, wobei der Griffabschnitt (25) mit dem zweiten Befestigungsabschnitt (21) verbunden ist und der Passabschnitt (22) am Griffabschnitt (25) angeordnet ist.

2. Befestigungsstruktur (100) nach Anspruch 1, wobei einer der erste Befestigungsabschnitt (11) und der zweite Befestigungsabschnitt (21) eine Befestigungsnut umfasst und der andere einen Befestigungsvorsprung umfasst, und die Befestigungsnut mit dem Befestigungsvorsprung in Eingriff steht.

3. Befestigungsstruktur (100) nach Anspruch 2, wobei die Befestigungsnut einen Zahntrog umfasst und der Befestigungsvorsprung einen Zahnabschnitt umfasst, der mit dem Zahntrog in Eingriff steht.

4. Befestigungsstruktur (100) nach einem der Ansprüche 1 bis 3, wobei der erste Befestigungsabschnitt (11) ein Zahnsegment (Ritzelstange) umfasst und der zweite Befestigungsabschnitt (21) ein Zahnrad umfasst, das mit dem Zahnsegment in Eingriff steht.

5. Befestigungsstruktur (100) nach einem der Ansprüche 1 bis 4, wobei die Befestigungsstruktur (100) ferner eine Drehachse (40) umfasst und der zweite Befestiger (20) drehbar über die Drehachse (40) mit dem zweiten Objekt verbunden ist, um relativ zum ersten Befestiger (10) zu rotieren.

6. Befestigungsstruktur (100) nach Anspruch 5, wobei im zweiten Befestiger (20) ein Achsloch (23) vorgesehen ist, wobei ein Ende der Drehachse (40) fest mit dem zweiten Objekt verbindbar ist und das andere Ende der Drehachse (40) durch das Achsloch (23) hindurchgeführt ist, um drehbar mit dem zweiten Befestiger (20) verbunden zu sein.

7. Befestigungsstruktur (100) nach Anspruch 6, wobei die Befestigungsstruktur (100) ferner ein Halteelement (50) umfasst, und das Halteelement (50) mit einem Ende der Drehachse (40) verbunden ist, das vom zweiten Objekt weiter entfernt liegt, sodass das Halteelement (50) zusammen mit dem zweiten Objekt einen Halteraum bildet, der den zweiten Befestiger (20) axial begrenzen kann.

8. Befestigungsstruktur (100) nach Anspruch 7, wobei die Drehachse (40) einstückig mit dem Halteelement (50) ausgebildet ist und die Drehachse (40) lösbar mit dem zweiten Objekt verbunden ist.

9. Befestigungsstruktur (100) nach einem der Ansprüche 1 bis 8, wobei das Verriegelungselement (30) erhaben auf einer Außenfläche des ersten Objekts oder des zweiten Objekts angeordnet ist.

10. Befestigungsstruktur (100) nach Anspruch 9, wobei der Passabschnitt (22) eine Verriegelungsnut aufweist und die Verriegelungsnut mit dem Verriegelungselement (30) in Eingriff steht, um die Verriegelung zu realisieren; vorzugsweise
wobei die Verriegelungsnut den zweiten Befestiger (20) vollständig durchdringt.

11. Befestigungsstruktur (100) nach Anspruch 9, wobei der Passabschnitt (22) elastisch ist und der Passabschnitt (22) vor dem Einrasten am Verriegelungselement (30) anliegt, sodass sich der Passabschnitt (22) verformt und nach dem Einrasten in das Verriegelungselement (30) aus der Verformung zurückkehren kann.

12. Befestigungsstruktur (100) nach einem der Ansprüche 1 bis 11, wobei die Befestigungsstruktur (100) ferner ein Führungselement (60) umfasst, das am ersten Objekt oder am zweiten Objekt befestigbar ist, wobei ein Spalt zwischen dem Führungselement (60) und dem ersten oder dem zweiten Objekt ausgebildet ist, um einen Führungsraum zu bilden, und der zweite Befestiger (20) während eines Drehvorgangs durch den Führungsraum geführt werden kann, um den zweiten Befestiger (20) zu führen; vorzugsweise
wobei der Passabschnitt (22) und der zweite Befestigungsabschnitt (21) voneinander beabstandet sind und der Führungsraum dazu ausgebildet ist, den zweiten Befestiger (20) zwischen dem Passabschnitt (22) und dem zweiten Befestigungsabschnitt (21) zu führen.

13. Ein Batteriekasten (200), umfassend einen Kastendeckel (210) und einen Kastenboden (220), wobei der Batteriekasten (200) ferner die Befestigungsstruktur (100) nach einem der Ansprüche 1 bis 12 umfasst und die Befestigungsstruktur (100) dazu ausgebildet ist, den Kastendeckel (210) und den Kastenboden (220) miteinander zu befestigen.

14. Eine Batterie (1000), **dadurch gekennzeichnet, dass** sie den Batteriekasten (200) nach Anspruch 13 umfasst.

## Revendications

1. Une structure de fixation (100), configurée pour fixer un premier objet et un second objet, la structure de fixation (100) comprenant :
un premier élément de fixation (10) pouvant être fixé sur le premier objet, le premier élément de fixation (10) comprenant une première portion de fixation (11) ;
un second élément de fixation (20) raccordé de manière amovible au premier élément de fixation (10), le second élément de fixation (20) comprenant une seconde portion de fixation (21) et une portion d'ajustement (22) ; et
un élément de verrouillage (30) pouvant être fixé sur le premier objet ou sur le second objet ;
dans lequel, lorsque le second élément de fixation (20) est raccordé au premier élément de fixation (10), la seconde portion de fixation (21) s'ajuste à la première portion de fixation (11), et le second élément de fixation (20) est apte à tourner par rapport au premier élément de fixation (10) pour entraîner le premier objet à se déplacer vers le second objet ; et
le second élément de fixation (20) est configuré pour verrouiller la portion d'ajustement (22) dans l'élément de verrouillage (30) au cours d'un processus de rotation ;
**caractérisé en ce que** le second élément de fixation (20) comprend une portion de poignée (25), la portion de poignée (25) étant reliée à la seconde portion de fixation (21) et la portion d'ajustement (22) étant disposée sur la portion de poignée (25).

2. Structure de fixation (100) selon la revendication 1, dans laquelle l'une de la première portion de fixation (11) et de la seconde portion de fixation (21) comprend une rainure de fixation, l'autre comprenant une saillie de fixation, et la rainure de fixation s'ajuste à la saillie de fixation.

3. Structure de fixation (100) selon la revendication 2, dans laquelle la rainure de fixation comprend une gorge dentée et la saillie de fixation comprend une portion dentée engagée dans la gorge dentée.

4. Structure de fixation (100) selon l'une quelconque des revendications 1 à 3, dans laquelle la première portion de fixation (11) comprend une crémaillère et la seconde portion de fixation (21) comprend un pignon engrené avec la crémaillère.

5. Structure de fixation (100) selon l'une quelconque des revendications 1 à 4, dans laquelle la structure de fixation (100) comprend en outre un arbre rotatif (40) et le second élément de fixation (20) est raccordé de manière rotative au second objet via l'arbre rotatif (40) pour tourner par rapport au premier élément de fixation (10).

6. Structure de fixation (100) selon la revendication 5, dans laquelle un trou d'arbre (23) est formé dans le second élément de fixation (20), une extrémité de l'arbre rotatif (40) étant apte à être fixée au second objet, et l'autre extrémité de l'arbre rotatif (40) traversant le trou d'arbre (23) pour être raccordée de manière rotative au second élément de fixation (20).

7. Structure de fixation (100) selon la revendication 6, dans laquelle la structure de fixation (100) comprend en outre un élément de retenue (50), l'élément de retenue (50) étant relié à l'extrémité de l'arbre rotatif (40) la plus éloignée du second objet, de manière à coopérer avec le second objet pour former un espace de retenue apte à limiter axialement le second élément de fixation (20).

8. Structure de fixation (100) selon la revendication 7, dans laquelle l'arbre rotatif (40) est formé d'une seule pièce avec l'élément de retenue (50) et l'arbre rotatif (40) est raccordé de manière amovible au second objet.

9. Structure de fixation (100) selon l'une quelconque des revendications 1 à 8, dans laquelle l'élément de verrouillage (30) est disposé en saillie sur une surface extérieure du premier objet ou du second objet.

10. Structure de fixation (100) selon la revendication 9, dans laquelle la portion d'ajustement (22) comprend une rainure de verrouillage, et la rainure de verrouillage s'ajuste à l'élément de verrouillage (30) pour effectuer le verrouillage ; de préférence
dans laquelle la rainure de verrouillage traverse entièrement le second élément de fixation (20).

11. Structure de fixation (100) selon la revendication 9, dans laquelle la portion d'ajustement (22) est élastique, et la portion d'ajustement (22) est apte à venir en butée contre l'élément de verrouillage (30) avant le verrouillage, de sorte que la portion d'ajustement (22) se déforme et retrouve sa forme après avoir été verrouillée dans l'élément de verrouillage (30).

12. Structure de fixation (100) selon l'une quelconque des revendications 1 à 11, dans laquelle la structure de fixation (100) comprend en outre un élément de guidage (60), l'élément de guidage (60) pouvant être fixé sur le premier ou le second objet, un espace étant formé entre l'élément de guidage (60) et ledit objet afin de former un espace de guidage, et le second élément de fixation (20) pouvant traverser l'espace de guidage au cours d'un processus de rotation pour guider sa rotation ; de préférence
dans laquelle la portion d'ajustement (22) et la seconde portion de fixation (21) sont espacées l'une de l'autre et dans laquelle l'espace de guidage est apte à guider la rotation du second élément de fixation (20) entre la portion d'ajustement (22) et la seconde portion de fixation (21).

13. Boîte de batterie (200) comprenant un couvercle de boîte (210) et un corps de boîte (220), dans laquelle la boîte de batterie (200) comprend en outre la structure de fixation (100) selon l'une quelconque des revendications 1 à 12, la structure de fixation (100) étant configurée pour fixer le couvercle de boîte (210) et le corps de boîte (220).

14. Batterie (1000), **caractérisée en ce qu'**elle comprend la boîte de batterie (200) selon la revendication 13.
